# EUROPÄISCHE PATENTANMELDUNG

(11) **EP 3 770 056 A1**
(43) Veröffentlichungstag der Anmeldung: **27.01.2021**
(21) Anmeldenummer: 20186951.8
(22) Anmeldetag: 21.07.2020
(51) Int. Cl.: B63B 27/10, B63B 35/00, B66C 23/52

(54) **ERRICHTERSCHIFFSKRAN**

(30) Priorität: 23.07.2019 DE 102019119901
(71) Anmelder: Liebherr-Werk Nenzing GmbH, 6710 Nenzing (AT)
(72) Erfinder: FISCHER, Helmut, 6719 Bludesch (AT); KÖRTGE, Stephan, 6700 Bludenz (AT)
(74) Vertreter: Laufhütte, Dieter

(57) **Zusammenfassung**

Die Erfindung betrifft einen Kran (20), als einen Bestandteil eines Errichterschiffes (10), das aus einem Schiffskorpus und mehreren auf diesem vertikal beweglich angeordneten Hubbeinen (14) besteht, wobei der Kran um eines der Hubbeine drehbar angeordnet ist. Erfindungsgemäß ist der Kran auf einer exzentrischen Plattform (32) drehbar gelagert, die selbst drehbar um das Hubbein angeordnett ist.

## Beschreibung

Die Erfindung betrifft einen Kran als einen Bestandteil eines Errichterschiffes, nach dem Oberbegriff des Anspruchs 1.

Insbesondere zum Aufbau von Offshore-Windkraftanlagen sind sogenannte Errichterschiffe oder nach dem englischen Sprachgebrauch Jach-Up-Vessel, die auch als Installationsschiffe bezeichnet werden, entwickelt worden. Im Gegensatz zu den im Bereich der Ölindustrie oder zu sonstigen Offshore Einsätzen üblichen Hubinseln handelt es sich bei Errichterschiffen um spezielle, für die Gründung und den Aufbau von Offshore-Windanlagen gebaute Arbeitsschiffe mit mindestens einem Schwerlastkran und eigenen für den Vortrieb und die dynamische Positionierung geeigneten Motoren und Propulsionsanlagen.

Neben sehr großen Decksflächen zur Aufnahme von Bauteilen, und einem üblichen Schiffskorpus wie auch weiteren Aufbauten zur Unterbringung der Besatzung weisen diese Errichterschiffe in der Regel leistungsfähige Bordkrane mit einer hohen Tragfähigkeit von 2500 bis hin zu 10.000 t auf, die häufig zur Errichtung von Windkraftanlagen eingesetzt werden. Bei den Errichterschiffen handelt es sich um einen eigenen Schiffstyp, der nicht mehr als Hubinsel bezeichnet werden kann, sondern ein Schwertransport-Schiff darstellt.

Die Errichterschiffe fahren mit einem eigenen Motor bei typischen Schiffsgeschwindigkeiten bis zu 15 Knoten an ihren Einsatzort. Dort werden sie mit Hilfe von 4 bis 6 hydraulisch oder elektrisch betriebenen Hubbeinen an einer festen Position im Meer aufgestellt. Während der Fahrt zu dem Einsatzort sind die Hubbeine angehoben. Erst beim Erreichen der vorgesehenen Position werden diese auf dem Meeresboden senkrecht abgesenkt, wobei nach Auftreffen auf den Meeresboden das Schiff üblicherweise dann noch 10 bis 20 Meter in die Höhe gehoben wird, sodass es durch das eigene Gewicht fest auf dem Meeresgrund verankert ist. Hierdurch ergibt sich eine stabile Arbeitsplattform, auf der der mindestens eine Kran zum Einsatz kommt.

Bei dem Kran handelt es sich in der Regel um einen großen Schwerlastkran, der die anfallenden Hubaufgaben, die beim Aufstellen der Windkraftanlagen eines Offshore-Windparks auftreten, übernimmt. Selbstverständlich können die Errichterschiffe auch für andere Hebeaufgaben offshore eingesetzt werden.

Es ist bereits bekannt, entsprechende Schwerlastkrane auf eigenes für sie vorgesehene Grundsäulen, die auf der großen Deckfläche des Errichterschiffes aufgebaut sind, drehbar anzuordnen. Diese Bauweise hat natürlich den Nachteil, dass neben den Hubbeinen, die auf der Decksfläche vorgesehen werden müssen, noch ein zusätzlicher Aufbau für den Schwerlastkran vorhanden ist, der Staufläche auf der Decksfläche belegt.

Um den hier zur Verfügung stehenden Platz noch besser einsetzen zu können, ist es beispielsweise bereits aus der US 5,580,189 oder US 4,417,664 bekannt geworden, den Kran nicht auf einer eigens dafür vorzusehenden Grundsäule zu platzieren, sondern ihn um eines der Hubbeine drehbar anzuordnen. Aus der US 4,417,664 A ist es dabei bereits bekannt, nicht nur einen Kran auf dem Errichterschiff vorzusehen, sondern mehrere Krane.

Die auf den Errichterschiffen zum Einsatz kommenden Krane weisen in der Regel recht lange Ausleger auf, um die hohen Windkraftanlagen aufbauen zu können. Aufgrund ihrer Anordnung im Bereich eines der Hubbeine können insbesondere aufgrund der vorhandenen Abstützfüße nicht alle Punkte an Deck insbesondere nicht im Nahbereich des Kran mit dem Kranhaken angefahren werden.

Aufgabe der vorliegenden Erfindung ist es daher, die Einsatzmöglichkeit des Kranes zu verbessern.

Erfindungsgemäß wird diese Aufgabe ausgehend von einem gattungsgemäßen Kran entsprechend dem Oberbegriff des Anspruchs 1 durch eine Kombination der Merkmale des Anspruchs 1 gelöst.

Demnach wird ein Kran als ein Bestandteil eines Errichterschiffes geschaffen, da es aus einem Schiffskorpus und mehreren auf diesem vertikal beweglich angeordneten Hubbeinen besteht, wobei der Kran um eines der Hubbeine drehbar angeordnet ist. Erfindungsgemäß ist der Kran auf einer exzentrischen Plattform drehbar gelagert, die selbst drehbar um das Hubbein angeordnet ist.

Durch das Vorsehen der exzentrischen Plattform kann grundsätzlich ein beliebiger Kran zusätzlich zur Drehung des Krans um die eigene Drehachse im Verhältnis zu einer zweiten Drehachse installiert und gedreht werden, die mit der Achse des Hubbeines zusammenfällt, um welches er drehbar angeordnet ist. Durch das Vorsehen der exzentrischen Plattform kann in vorteilhafter Weise aufgrund deren eigener Ausladung eine kleinere Krangröße angeboten werden.

Durch die Bewegungskinematik der beiden Drehpunkte können nahezu alle Punkte an Deck inklusive dem Nahbereich des Krans mit dem Haken angefahren werden.

Hindernisse wie beispielsweise die Hubbeine können durch intelligente Drehwinkelkombinationen kollisionsfrei umfahren werden. Der Kran selbst kann in einfache Weise durch den Kranfahrer an eine fixe Arbeitsposition gedreht werden. Aufgrund der exzentrischen Anordnung des Krans kann er auch zum kollisionsfreien Be- und Entladen mit einem Fremdkran aus der Gefahrenzone bzw. Ladezone gedreht werden.

Weiterhin kann durch zwei geeignete Exzenter-Drehwinkel eine kurze und eine lange Auslegerkonfiguration auf einem relativ kleinen Schiff berücksichtigt werden.

Besonders vorteilhafte Ausgestaltung der Erfindung ergeben sich aus den sich an den Hauptanspruch anschließenden Unteransprüchen.

Dabei kann die exzentrische Plattform auf einer Seite eine Ausnehmung aufweisen, durch die das Hubbein hindurch geführt ist. Auf der gegenüber liegenden Seite der exzentrischen Plattform kann dann der Kran drehbar aufgenommen werden.

Gemäß einer weiteren bevorzugten Ausgestaltung der Erfindung kann die exzentrische Plattform über ein schiffsseitlig montiertes Drehwerk um das Hubbein drehbar sein, wobei auch das Drehwerk eine vorzugsweise mittige Ausnehmung aufweist, durch die das Hubbein hindurch geführt ist.

Gemäß einer weiteren Ausgestaltung der Erfindung kann am frei auskragenden Ende der exzentrischen Plattform der Kran über ein Drehwerk drehbar aufgenommen sein.

Die Hubbeine sind vorteilhaft über auf dem Schiffskorpus angeordnete Antriebseinheiten ausfahrbar und einfahrbar, um so das Errichterschiff auf dem Meeresboden zu verankern und entsprechend hochzuheben.

Vorteilhaft ist das Drehwerk zur Aufnahme der exzentrischen Plattform ggf. über einen Adapter auf einer der Antriebseinheiten angeordnet.

Der Kran selbst kann eine Drehbühne aufweisen, die mit dem Drehwerk verbunden ist, wobei direkt oder indirekt an der Drehbühne ein Ausleger und mindestens ein Abspannbock angelenkt sind.

Besonders vorteilhaft ist es, wenn die Hubbeine und / oder der Kranausleger als Gittermast ausgeführt sind.

Schließlich ist auf dem Schiff ein Ablagebock zur Aufnahme des abgelegten feien Auslegerendes in der Transportposition vorgesehen.

Vorteilhaft kann eine Regelung zur Zweikrandrehwinkelsteuerung zum effizienten Laden von Schiffen berücksichtigt werden.

Vorteilhaft kann durch das Zusammenfallen der Exzenterdrehachse mit der Längsachse eines Hubbeines des Schiffes die Struktur für eine zusätzliche Grundsäule an Deck inklusive dem zugehörigen Bauraum an Deck des Schiffes eingespart werden, hierdurch kann auf dem Schiffsdeck des Schiffskorpus mehr Stauraum zur Verfügung gestellt werden.

Auch wenn in der Regel ein Schwerlastkran pro Errichterschiff vorgesehen ist, kann im Rahmen der Erfindung eine Mehrzahl von Kranen auf einem Errichterschiff vorgesehen werden. Hierbei kann bei Bedarf um jedes der Hubbeine ein entsprechender Kran drehbar angeordnet sein.

Weitere Merkmale, Einzelheiten und Vorteile der Erfindung werden anhand eines in der Zeichnung dargestellten Ausführungsbeispiels erläutert. Es zeigen:
- Figur 1:: eine perspektivische Ansicht eines vereinfacht dargestellten Errichterschiffes mit einem erfindungsgemäßen Kran gemäß einem Ausführungsbeispiel der Erfindung,
- Figur 2:: eine andere perspektivische Ansicht des Errichterschiffes gemäß Figur 1, in welchem die Drehradien des Krans verdeutlicht werden,
- Figuren 3, 4 und 5:: weitere Darstellungen des Errichterschiffes gemäß Figur 1 mit unterschiedlichen Stellungen des Krans, und
- Figur 6:: eine Darstellung des Errichterschiffes gemäß Figur 1, in welcher der Kran in einer Transportposition abgelegt ist.

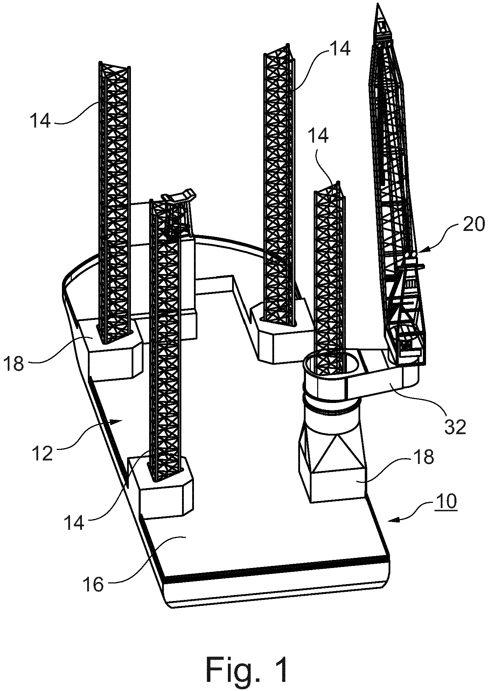

In Figur 1 ist in vereinfachter Darstellung ein Errichterschiff 10 gezeigt. Derartige Errichterschiffe werden auch als Installationsschiffe oder entsprechend der englischen Bezeichnung Jack-Up-Vessel bezeichnet. In üblicher Weise weist das Errichterschiff jeweils seitlich im vorderen und hinteren Bereich des Schiffskorpus 12 angeordnete Hubbeine 14 auf. Diese Hubbeine 14 sind in der Darstellung gemäß Figur 1 in der Fahrposition des Errichterschiffs dargestellt. Das bedeutet, dass diese an sich vertikal beweglich angeordneten Hubbeine 14 in einer nach oben über das Schiffsdeck 16 ragenden Position angeordnet sind. In dieser Position verfährt das Errichterschiff 10 über die hier nicht näher dargestellten Schiffsantriebe typischerweise mit einer Schiffsgeschwindigkeit von bis zu 15 Knoten und mehr.

Bei Erreichen der gewünschten Position, in der das Bauwerk, beispielsweise ein Windrad, offshore zu errichten ist, wird das Errichterschiff dadurch auf den Meeresboden verankert, dass die Hubbeine 14 vertikal durch hier nicht näher dargestellte Antriebe 18 vertikal nach unten unterhalb des Schiffskorpus verfahren werden bis sie auf den Meeresboden auftreffen. Die Hubbeine 14 werden dabei nach Auftreffen auf dem Meeresboden als Stützen verwendet, um den gesamten Schiffskorpus 12 circa 10-20 Meter über der Meeresoberfläche hinaus anzuheben. In dieser Arbeitsposition wird dann üblicherweise der vorgesehene Hubkran 20 eingesetzt.

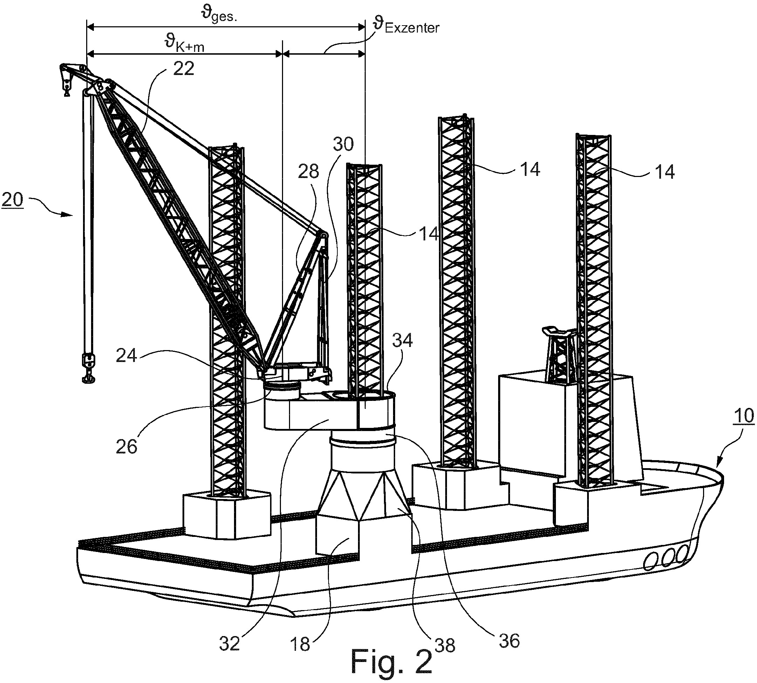

Wie insbesondere aus der Figur 2 ersichtlich, handelt es sich bei dem Hubkran 20 um einen üblichen maritimen Schwerlastkran, der bis zu circa 3000 t tragen kann.

Der Kran weist einen langen Ausleger 22 auf, der schwenkbar an einer Drehbühne 24 angelenkt ist. Die Drehbühne 24 wiederum ist auf einem Drehwerk 26 aufgelagert. Der Ausleger 22 weist im hier dargestellten Ausführungsbeispiel einen Abspannbock 28, 30 auf. Im vorliegenden Ausführungsbeispiel ist ein einzelner Ausleger 22 als Gitterausleger gezeichnet. Es können hier aber auch mehrteilige Gitterausleger Verwendung finden, wie sie beispielsweise in der US 5,580,189 dargestellt sind.

Der gesamte Kran 20 ist auf einer exzentrischen Plattform 32 gelagert, wie dies in Figur 2 gezeigt ist. Diese exzentrische Plattform weist an einer Seite eine große Ausnehmung 34 auf, durch die das Hubbein hindurchgeführt ist. Auf der gegenüberliegenden frei auskragenden Seite trägt der Exzenter 32 das Drehwerk 26 für den Kran 20. Der Exzenter 32 ist über ein Drehwerk 36, welches ebenfalls eine mittige Ausnehmung aufweist, durch die das Hubbein hindurchgeführt ist, drehbar gelagert. Dabei ist das Hubwerk 36 über einen Adapter 38 auf der Antriebseinheit 18 des Hubbeins 14 aufgebaut.

Aufgrund der vorbeschriebenen Bauweise kann der Kran 20 zunächst um seine eigene Drehachse mittels des Drehwerks 26 gedreht werden. Zusätzlich kann er parallel zu dieser eigenen Drehachse um eine zweite Drehachse, nämlich der Drehachse des Exzenters 32, die mit der Symmetrieachse des Hubbeins 14 zusammenfällt, gedreht werden. Somit ergibt sich für den Drehradius des Krans selbst der Radius r_{Kran}, wie er in Figur 2 eingezeichnet ist. Der Gesamtdrehradius r_{Ges} ergibt sich dann aus einer Überlagerung des Drehradius des Kranes r_{Kran} mit dem Drehradius des Exzenters r_{Exzenter}.

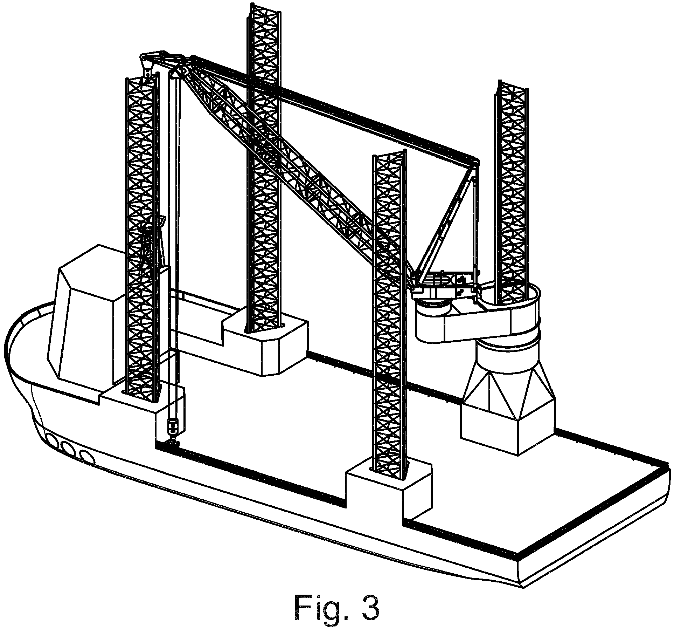

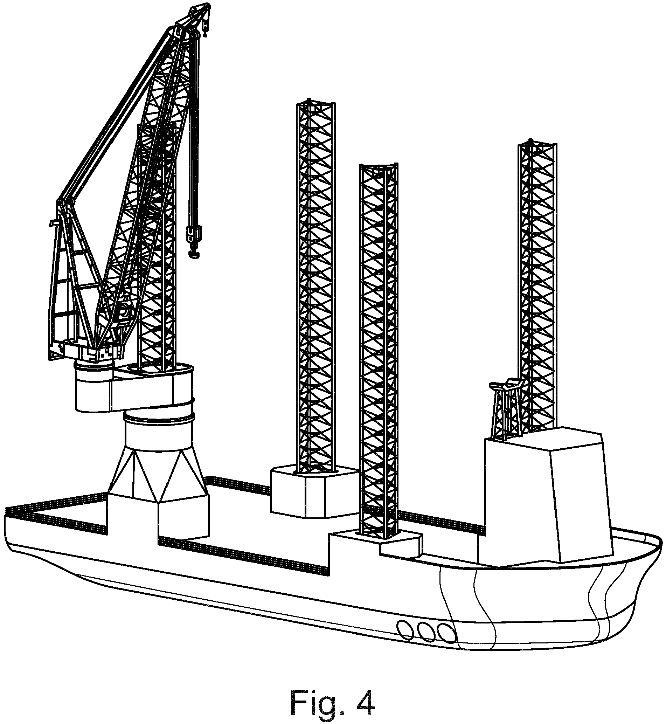

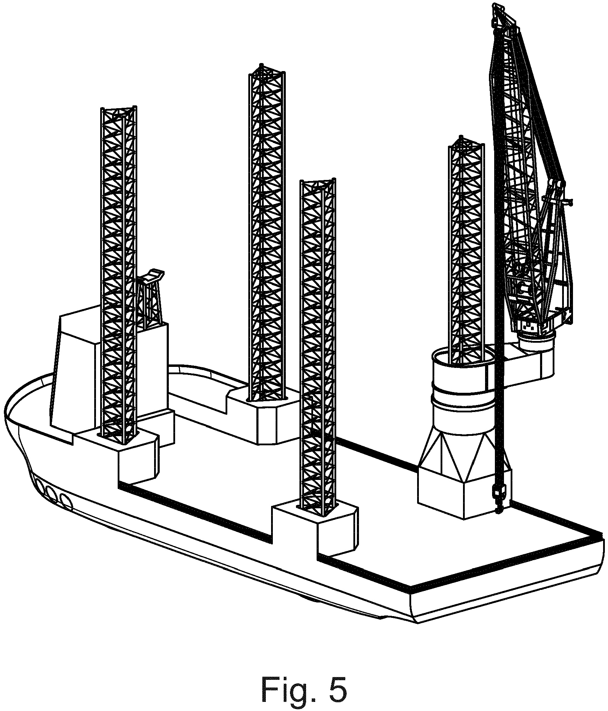

In den Figuren 1-6 sind unterschiedliche Positionen des Krans, die durch Überlagerung der Drehradien r_{Exzenter} und r_{Kran} erzeugt werden, dargestellt. Wie anhand dieser beispielhaften Positionierung zu erkennen ist, können hier auch bei ausgefahrenen Hubbeinen 14, wie sie in dem hier vorliegenden Darstellungen gezeigt sind, nahezu alle Bereiche im Nahbereich des Schiffskorpus mit dem Kranhaken erreicht werden.

Besonders vorteilhaft ist die Stellung des Krans gemäß Figur 1, in welcher der Kran 20 über die exzentrische Plattform 32 in eine Außenposition neben dem Schiffskörper gefahren ist. Hier kann das Errichterschiff mittels eines Fremdkrans kollisionsfrei be- und entladen werden.

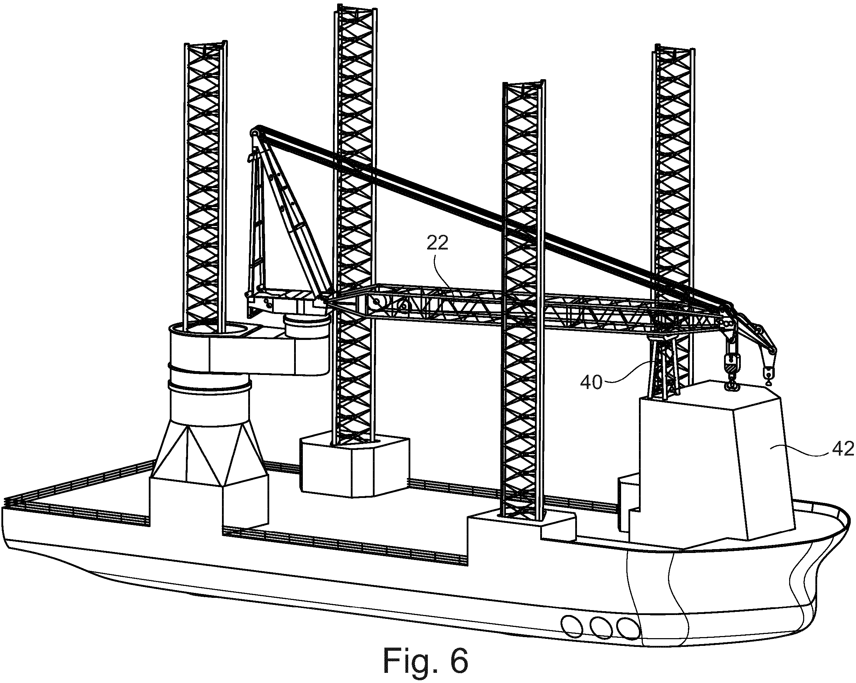

In Figur 6 ist der Kran in einer typischen Transportstellung dargestellt, in der der Ausleger 22 auf einem Ablagebock 40 aufliegt. Der Ablagebock 40 ist im hier vorliegenden Ausführungsbeispiel auf einem Schiffsaufbau 42, der beispielsweise die Schiffsbrücke des Errichterschiffs 10 darstellt, aufgebaut.

## Patentansprüche

1. Kran als ein Bestandteil eines Errichterschiffes, das aus einem Schiffskorpus und mehreren auf diesem vertikal beweglich angeordneten Hubbeinen besteht, wobei der Kran um eines der Hubbeine drehbar angeordnet ist,
**dadurch gekennzeichnet,**
**dass** der Kran auf einer exzentrischen Plattform drehbar gelagert ist, die selbst drehbar um das Hubbein angeordnet ist.

2. Kran nach Anspruch 1, **dadurch gekennzeichnet, dass** die exzentische Plattform auf einer Seite eine Ausnehmung aufweist, durch die das Hubbein hindurchgeführt ist, und dass sie auf der gegenüberliegenden Seite den Kran drehbar aufnimmt.

3. Kran nach einem der vorhergehenden Ansprüche, **dadurch gekennzeichnet, dass** die exzentrische Plattform über ein schiffsseitig montiertes Drehwerk um das Hubbein drehbar ist, wobei auch das Drehwerk eine vorzugsweise mittige Ausnehmung aufweist, durch die das Hubbein hindurchgeführt ist.

4. Kran nach einem der vorhergehenden Ansprüche,, **dadurch gekennzeichnet, dass** am frei auskragenden Ende der exzentrischen Plattform der Kran über ein Drehwerk drehbar aufgenommen ist.

5. Kran nach einem der vorhergehenden Ansprüche, **dadurch gekennzeichnet, dass** die Hubbeine über auf dem Schiffskorpus angeordnete Antriebseinheiten ausfahrbar und einfahrbar sind.

6. Kran nach Anspruch 5, **dadurch gekennzeichnet, dass** das Drehwerk zur Aufnahme der exzentrischen Plattform gegebenenfalls über einen Adapter auf einer der Antriebseinheiten angeordnet ist.

7. Kran nach einem der vorhergehenden Ansprüch, **dadurch gekennzeichnet, dass** der Kran eine Drehbühne aufweist, die mit dem Drehwerk verbunden ist, wobei direkt oder indirekt an der Drehbühne ein Ausleger und mindestens ein Abspannbock angelenkt sind.

8. Kran nach einem der vorhergehenden Ansprüche, **dadurch gekennzeichnet, dass** die Hubbeine und/oder der Kranausleger als Gittermast ausgeführt sind.

9. Kran nach einem der vorhergehenden Ansprüche , **dadurch gekennzeichnet, dass** auf dem Schiff ein Ablagebock zu Aufnahme des abgelegten freien Auslegerendes in der Transportposition vorgesehen ist.

10. Errichterschiff mit einem Kran nach einem der Ansprüche 1 bis 9.
